# EUROPEAN PATENT APPLICATION

(11) **EP 2 712 271 A2**
(43) Date of publication of application: **26.03.2014**
(21) Application number: 13158759.4
(22) Date of filing: 12.03.2013
(51) Int. Cl.: H05B 33/08

(54) **Power supply device**

(30) Priority: 24.09.2012 JP 2012210157
(71) Applicant: Toshiba Lighting & Technology Corporation, Yokosuka-shi Kanagawa 237-8510 (JP)
(72) Inventor: Kato, Go, Kanagawa 237-8510 (JP); Otake, Hirokazu, Kanagawa 237-8510 (JP); Kitamura, Noriyuki, Kanagawa 237-8510 (JP); Nakamura, Hiroto, Kanagawa 237-8510 (JP)
(74) Representative: Bokinge, Ole

(57) **Abstract**

A power supply device (30) including a switching circuit (35) and a control circuit (34). The switching circuit (35) adjusts, according to ON-OFF control for an input voltage, electric power supplied to a lighting load (40). The control circuit (34) controls ON and OFF of the switching circuit (35) such that the electric power supplied to the lighting load (40) coincides with target power. The control circuit (34) that operates at a frequency equal to or higher than a switching frequency of the switching circuit (35) is used. That is, a control frequency of the control circuit (34) for the switching circuit (35) is equal to or higher than the switching frequency of the switching circuit (35).

## Description

### FIELD

Embodiments described herein relate generally to a power supply device used in a luminaire.

### BACKGROUND

In recent years, a luminaire in which an LED (Light Emitting Diode) is used as a lighting load has been developed. A dimmer capable of adjusting the brightness of the LED has also been developed.

Some dimmable LED luminaire includes a power supply device that detects, using feedback control, a difference between supply power to an LED and target power corresponding to a dimming ratio and adjusts the supply power to the LED to eliminate the difference.

In the power supply device that adjusts the supply power to the lighting load, in general, an operational amplifier is used for the feedback control for matching the supply power to the LED with the target power. In order to give priority to stability at a low frequency of 50 Hz or 60 Hz, which is the frequency of the commercial alternating-current power supply, and prevent oscillation of the operational amplifier at a high-frequency, in general, a phase compensation circuit including a capacitor and a resistor is provided in the power supply device.

The commercial alternating-current power supply is connected to various electric devices other than the luminaire. Therefore, in a voltage supplied to the luminaire, voltage fluctuation of about several kilohertz sometimes occurs because of the influence of high-frequency components of signals in the other electric devices. For example, high-frequency fluctuation of about 2 kHz is sometimes superimposed on the voltage supplied to the luminaire.

Since the stability at the low-frequency is given priority in the operational amplifier as explained above, if the power supply voltage in which the high-frequency voltage fluctuation occurs is supplied to the luminaire, the operation of the operational amplifier cannot follow the high-frequency voltage fluctuation. That is, the feedback control using the operational amplifier which operates at a low-frequency cannot handle the high-frequency voltage fluctuation. Therefore, the supply power to the LED becomes unstable according to the high-frequency voltage fluctuation. As a result, flickering of the LED occurs.

In particular, in phase dimming in the past in which the voltage supplied from the commercial power supply is used as a dimming signal as well, the flickering of the LED is conspicuous.

### BRIEF DESCRIPTION OF THE DRAWINGS

FIG. 1 is a configuration diagram showing an example of a power supply device according to a first embodiment;
FIG. 2 is a waveform chart showing an example of a waveform in the first embodiment; and
FIG. 3 is a configuration diagram showing an example of a power supply device according to a second embodiment.

### DETAILED DESCRIPTION

An object of embodiments disclosed herein is to provide a power supply device that can supply stable electric power to a lighting load even if a power supply voltage in which high-frequency voltage fluctuation occurs is supplied to a luminaire.

In embodiments explained below, a power supply device includes a switching circuit and a control circuit. The switching circuit adjusts, according to ON-OFF control for an input voltage, electric power supplied to a lighting load. The control circuit controls ON and OFF of the switching circuit such that the electric power supplied to the lighting load coincides with target power. The control circuit that operates at a frequency equal to or higher than a switching frequency of the switching circuit is used. That is, a control frequency of the control circuit for the switching circuit is equal to or higher than the switching frequency of the switching circuit.

The power supply device includes a converting circuit and a setting circuit. The converting circuit receives an alternating-current voltage, a conduction angle of which is controlled, as an input voltage and converts the input voltage into information concerning an ON time for one period of the alternating-current voltage. The setting circuit sets the target power on the basis of the ON time.

Power supply devices according to the embodiments are explained below with reference to the drawings. In the embodiments, components having the same functions are denoted by the same reference numerals and signs and redundant explanation of the components is omitted.

### First Embodiment

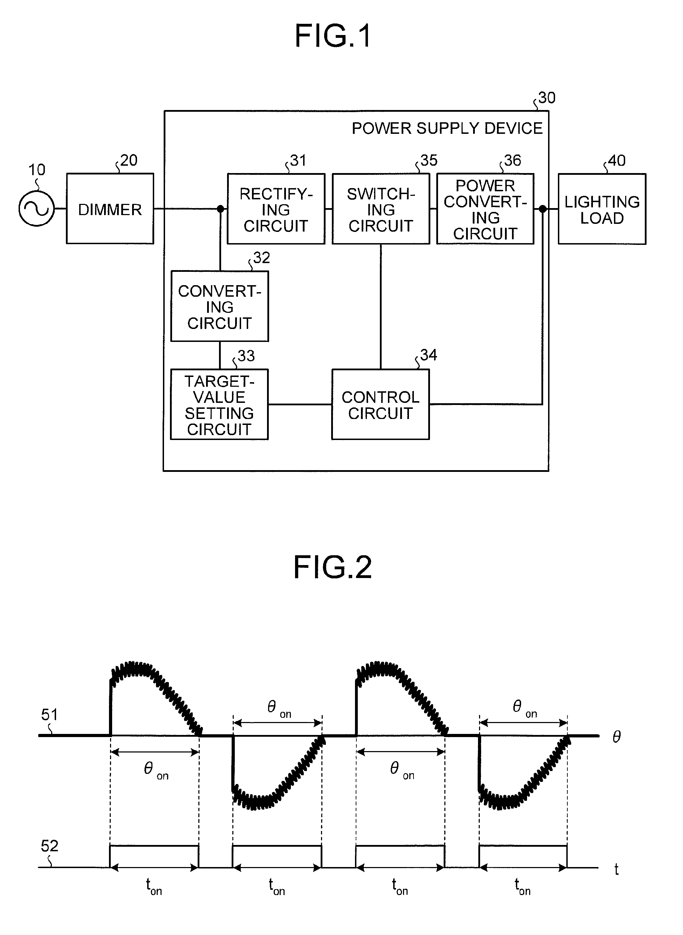

FIG. 1 is a configuration diagram showing an example of a power supply device according to a first embodiment. As shown in FIG. 1, a power supply device 30 is connected between a dimmer 20 and a lighting load 40. The dimmer 20 is connected to a commercial alternating-current power supply 10. The light source device 30 and the lighting load 40 are provided in a luminaire (not shown in the figure).

The power supply device 30 includes a rectifying circuit 31, a converting circuit 32, a target-value setting circuit 33, a control circuit 34, a switching circuit 35, and a power converting circuit 36.

The commercial alternating-current power supply 10 is, for example, a power supply having 50 Hz or 60 Hz and 100 V.

The dimmer 20 controls, for dimming, a conduction angle (a phase angle) of the commercial alternating-current power supply 10 using a phase control element such as a triac and outputs an alternating-current voltage, a conduction angle of which is controlled, to the rectifying circuit 31 and the converting circuit 32. An output waveform of the dimmer 20 is, for example, a waveform in which a conduction angle of a sine wave is controlled as indicated by a waveform 51 shown in FIG. 2. Such a dimmer 20 is generally referred to as phase dimmer. A well-known phase dimmer can be used as the dimmer 20.

The rectifying circuit 31 rectifies the alternating-current voltage, the conduction angle of which is controlled, and outputs a rectified voltage to the switching circuit 35.

The switching circuit 35 adjusts, according to ON-OFF control for an input voltage from the rectifying circuit 31, electric power supplied to the lighting load 40. The ON-OFF control of the switching circuit 35 is performed by the control circuit 34. According to the ON-OFF control in the switching circuit 35, several pulses are curtailed from a waveform obtained by rectifying the waveform 51 shown in FIG. 2. As the number of times the switching circuit 35 is turned off is larger, the number of pulses to be curtailed increases and electric power supplied to the lighting load 40 decreases. In other words, time in which the switching circuit 35 is on is longer, the number of pulses to be curtailed decreases and the electric power supplied to the lighting load 40 increases. In this way, according to the ON-OFF control of the switching circuit 35, the number of pulses output from the switching circuit 35 to the power converting circuit 36 changes.

In order to supply stable electric power to the lighting load 40 even if high-frequency noise is superimposed on the commercial alternating-current power supply 10, a switching frequency of the switching circuit 35 is set higher than the frequency of voltage fluctuation. For example, if it is predicted that voltage fluctuation of about several kilohertz (e.g., 2 kHz) is sometimes superimposed, the switching circuit 35 having a switching frequency of several ten kilohertz (e. g. , 66 kHz) is desirably used.

The power converting circuit 36 includes a capacitor. When the switching circuit 35 is on, the power converting circuit 36 charges the capacitor with a pulse train input from the switching circuit 35. On the other hand, when the switching circuit 35 is off, the power converting circuit 36 discharges a constant current from the capacitor. Consequently, the power converting circuit 36 outputs a direct-current voltage to the lighting load 40 and lights the lighting load 40 with a direct current. Therefore, the magnitude of electric power supplied to the lighting load 40 changes according to the number of pulses input to the power converting circuit 36 from the switching circuit 35. That is, electric power adjusted by the ON-OFF control in the switching circuit 35 is supplied to the lighting load 40.

The direct-current voltage output from the power converting circuit 36 is input to the control circuit 34 as a feedback signal.

The lighting load 40 is, for example, an LED or a discharge lamp.

The converting circuit 32 detects a conduction angle of an alternating-current voltage input from the dimmer 20 and converts information concerning the conduction angle into information concerning time. First, when the alternating-current voltage is input as an input voltage, the converting circuit 32 specifies the frequency of the alternating-current voltage. The converting circuit 32 uses a period equal to or larger than at least 5 cycles in order to specify the frequency of the alternating-current voltage. Subsequently, the converting circuit 32 sets a voltage higher than a zero-cross of the alternating-current voltage, for example, a voltage equal to or higher than 1 V as a threshold and detects a voltage equal to or higher than the threshold as a conduction angle. As shown in FIG. 2, the converting circuit 32 converts the waveform 51 input from the dimmer 20 into a pulse train 52 having an ON time tₒₙ equivalent to θₒₙ of the waveform 51 as a rise time. The converting circuit 32 calculates a duty ratio of the ON time for one period of the alternating-current voltage from the converted pulse train 52 and the specified frequency and outputs the duty ratio to the target-value setting circuit 33. Consequently, it is possible to reduce an error of the conduction angle.

The converting circuit 32 may output, rather than the duty ratio, the converted pulse train to the target value setting circuit 33. Consequently, it is possible to reduce an error of the conduction angle.

A waveform of the input voltage input to the converting circuit 32 is desirably set to a waveform in which a rising form and a falling form of the alternating-current voltage, the conduction angle of which is controlled, are dulled by, for example, a not-shown circuit to allow the converting circuit 32 to easily detect the conduction angle.

The target-value setting circuit 33 sets, on the basis of the duty ratio input from the converting circuit 32, a target value of a voltage output to the lighting load 40. That is, the target-value setting circuit 33 sets, as the target value, a voltage value corresponding to the duty ratio of the ON time for one period of the alternating-current voltage. The target-value setting circuit 33 sets a larger target voltage as the duty ratio is larger.

When the converted pulse train is input from the converting circuit 32, the target-value setting circuit 33 sets, on the basis of the pulse train input from the converting circuit 32, the target value of the voltage output to the lighting load 40. That is, the target-value setting circuit 33 sets, as the target value, a voltage value corresponding to the ON time tₒₙ for one period of the alternating-current voltage. The target-value setting circuit 33 sets a larger target voltage as the ON time tₒₙ is longer.

The target-value setting circuit 33 outputs the set target voltage to the control circuit 34.

As θₒₙ shown in FIG. 2 is longer, the electric power supplied from the power converting circuit 36 to the lighting load 40 is larger. As explained above, the ON time tₒₙ is equivalent to θₒₙ of the waveform 51. Therefore, setting the target value corresponding to the duty ratio of the ON time for one period of the alternating-current voltage and setting the target voltage corresponding to the ON time tₒₙ for one period of the alternating-current voltage is equal to setting target power corresponding to the ON time tₒₙ for one period of the alternating-current voltage.

The control circuit 34 controls ON and OFF of the switching circuit 35 such that the direct-current voltage (a feedback voltage) input from the power converting circuit 36 coincides with the target voltage input from the target-value setting circuit 33. Therefore, the control circuit 34 detects a difference between the feedback voltage and the target voltage. The electric power supplied to the lighting load 40 is larger as the number of pulses input to the power converting circuit 36 is larger. Therefore, when the feedback voltage is larger than the target voltage, the control circuit 34 increases the number of times the switching circuit 35 is turned off and reduces the number of pulses input to the power converting circuit 36. On the other hand, when the feedback voltage is smaller than the target voltage, the control circuit 34 reduces the number of times the switching circuit 35 is turned off and increases the number of pulses input to the power converting circuit 36. Consequently, it is possible to control electric power supplied to the lighting load 40 to coincide with the target power.

Even if the switching circuit 35 can operate at a switching frequency higher than the frequency of noise superimposed on the commercial alternating-current power supply 10, if a control frequency of the control circuit 34 is lower than the switching frequency of the switching circuit 35, the switching circuit 35 can operate only at a frequency equal to or lower than the control frequency of the control circuit 34. Therefore, in this embodiment, the control circuit 34 that operates at a frequency equal to or higher than the switching frequency of the switching circuit 35 is used. That is, the control frequency of the control circuit 34 for the switching circuit 35 is set to a frequency equal to or higher than the switching frequency of the switching circuit 35. For example, if the switching frequency of the switching circuit 35 is 66 kHz, the control circuit 34 having an operating frequency equal to or higher than 66 kHz is used. Consequently, it is possible to cause feedback control for the electric power supplied to the lighting load 40 to follow high-frequency voltage fluctuation. As the control circuit 34 having an operating frequency of several ten kilohertz, for example, a comparator that does not require a phase compensation circuit can be used instead of the operational amplifier in the past.

As explained above, in the first embodiment, the power supply device 30 includes the switching circuit 35 and the control circuit 34. The switching circuit 35 adjusts, according to ON-OFF control for an input voltage, electric power supplied to the lighting load 40. The control circuit 34 controls ON and OFF of the switching circuit 35 such that electric power supplied to the lighting load 40 coincides with the target power. The control frequency of the control circuit 34 for the switching circuit 35 is equal to or higher than the switching frequency of the switching circuit 35. Consequently, the switching circuit 35 can perform switching at an operable maximum switching frequency. Therefore, even if high-frequency noise is superimposed on the commercial alternating-current power supply 10, the power supply device 30 can supply stable electric power to the lighting load 40.

In the first embodiment, the converting circuit 32 receives an alternating-current voltage, a conduction angle of which is controlled, as an input voltage and converts the input voltage into information concerning an ON time for one period of the alternating-current voltage. The target-value setting circuit 33 sets target power on the basis of the ON time. Consequently, it is possible to set the target power on the basis of, rather than the conduction angle of the alternating-current voltage, the ON time for one period of the alternating-current voltage equivalent to the conduction angle. That is, even if high-frequency noise shown in FIG. 2 is superimposed on the waveform 51, it is possible to set the target power on the basis of, rather than the waveform 51, the ON time tₒₙ from which the influence of the noise is eliminated. Therefore, it is possible to supply more stable electric power to the lighting load 40.

### Second Embodiment

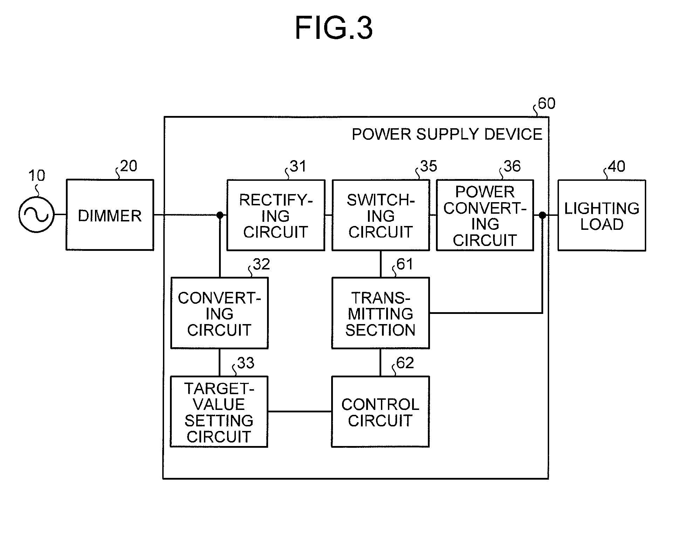

FIG. 3 is a configuration diagram of an example of a power supply device according to a second embodiment. As shown in FIG. 3, a power supply device 60 is connected between the dimmer 20 and the lighting load 40. The power supply device 60 and the lighting load 40 are provided in a luminaire (not shown in the figure).

The power supply device 60 includes the rectifying circuit 31, the converting circuit 32, the target-value setting circuit 33, the switching circuit 35, the power converting circuit 36, a transmitting section 61, and a control circuit 62.

In the power supply device 60, a current path for drawing out an electric current from any point further on the lighting load 40 side than the switching circuit 35, for example, a point between the power converting circuit 36 and the lighting load 40 to the control circuit 62 is provided. The transmitting section 61 is connected to the current path in series.

The transmitting section 61 transmits a control signal to the switching circuit 35 in an insulated state according to the electric current drawn out from the point between the power converting circuit 36 and the lighting load 40. The transmitting section 61 is, for example, a photocoupler.

When turning off the switching circuit 35, the control circuit 62 draws out an electric current to the control circuit 62 side via the transmitting section 61. At this point, the switching circuit 35 is controlled in the insulated state by the transmitting section 61.

As explained above, in the second embodiment, since the current path for drawing out an electric current from the point between the power converting circuit 36 and the lighting load 40 is provided, it is possible to cause the power supply device 60 to stably operate. For example, in the case of deep dimming, whereas a load current decreases and the operation of the dimmer 20 tends to be unstable, since an electric current flowing to the lighting load 40 can be secured by drawing out an electric current to the control circuit 62, it is possible to cause the power supply device 60 to stably operate. Since the switching circuit 35 is controlled in the insulated state according to the electric current drawn out to the control circuit 62, it is unnecessary to take into account electric influence on the switching circuit 35, for example, take into account an earth in circuit design.

As explained above, according to the embodiments, even if a power supply voltage in which high-frequency voltage fluctuation occurs is supplied to a luminaire, it is possible to supply stable electric power to a lighting load.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (30, 60) comprising:
a switching circuit (35) configured to adjust, according to ON-OFF control for an input voltage, electric power supplied to a lighting load (40); and
a control circuit (34, 62) configured to control ON and OFF of the switching circuit (35) such that the electric power supplied to the lighting load coincides with target power, wherein
a control frequency of the control circuit (34, 62) for the switching circuit (35) is equal to or higher than a switching frequency of the switching circuit (35).

2. The power supply device (30, 60) according to claim 1, further comprising:
a converting circuit (32) configured to receive an alternating-current voltage, a conduction angle of which is controlled, as an input voltage and convert the input voltage into information concerning an ON time for one period of the alternating-current voltage; and
a setting circuit (33) configured to set the target power on the basis of the ON time.

3. The power supply device according to claim 1, further comprising a current path for drawing out an electric current from any point further on the lighting load (40) side than the switching circuit (35) to the control circuit (62), wherein
the control circuit (62) draws out the electric current via the current path when the control circuit (62) turns off the switching circuit (35).

4. The power supply device according to claim 3, further comprising a transmitting section (61) provided in the current path and configured to transmit a control signal to the switching circuit (35) in the insulated state according to the drawn-out electric current.

5. The power supply device according to claim 4, wherein the transmitting section (61) is a photocoupler.
